# EUROPEAN PATENT SPECIFICATION

(11) **EP 3 905 589 B1**
(45) Date of publication and mention of the grant of the patent: **09.10.2024**
(21) Application number: 19903329.1
(22) Date of filing: 22.10.2019
(51) Int. Cl.: H04L 41/342, H04L 41/5019, H04L 41/5051, H04W 28/16, H04W 28/24

(54) **SLICE RESOURCE DEPLOYMENT METHOD AND APPARATUS, AND SLICE MANAGER AND COMPUTER STORAGE MEDIUM**
VERFAHREN UND VORRICHTUNG ZUM EINSATZ VON SLICE-RESSOURCEN, SOWIE SLICE-MANAGER UND COMPUTERSPEICHERMEDIUM
PROCÉDÉ ET APPAREIL DE DÉPLOIEMENT DE RESSOURCE DE TRANCHE, ET DISPOSITIF DE GESTION DE TRANCHE ET SUPPORT DE STOCKAGE INFORMATIQUE

(30) Priority: 28.12.2018 CN 201811619508
(43) Date of publication of application: 03.11.2021
(73) Proprietor: ZTE Corporation, Shenzhen, Guangdong 518057 (CN)
(72) Inventor: SHI, Jie, Shenzhen, Guangdong 518057 (CN)
(74) Representative: Mozzi, Matteo
(86) International application number: PCT/CN2019/112549
(87) International publication number: WO 2020/134414

(56) References cited:
- WO-A1-2018/086622
- WO-A1-2018/141183
- CN-A- 108 174 394
- CN-A- 108 270 823
- US-A1- 2017 054 595
- US-A1- 2018 316 564

## Description

### Technical Field

Embodiments of the invention relate, but are not limited, to the field of slice resource deployment, and particularly to a slice resource deployment method and device. Slice resource management may be implemented, and slice resources may be allocated optimally.

### Background

At present, in a related slice resource management technology, when slice resources are deployed, only a deployment request for the slice resources is considered, while no optimal deployment manners for the slice resources may be obtained according to the deployment request for the slice resources. That is, slice resources may not be fully utilized through a slice resource deployment solution in a related art.

US 2018/316564 A1, disclosing a system for managing a network comprising at least one network slice instance including at least one network slice subnet instance, and WO 2018/141183 A1, relating to an orchestration and management system and a network slice processing method, provide related technical solutions; however, the above mentioned problem still remains unsolved.

### Summary

The embodiments of the invention provide a slice resource deployment method and device. End-to-end resource information may be combined for slice resource deployment, and resources may be fully utilized.

The present invention is defined by the appended independent claims, the dependent claims constitute embodiments of the invention, any other embodiment of the description not covered by the appended claims is to be considered as not being part of the present invention.

According to the slice resource deployment solution of the embodiments of the invention, overall end-to-end slice resource information may be obtained on one hand, and on the other hand, resources may be utilized optimally and fully by reasonable resource allocation.

### Brief Description of the Drawings

Fig. 1 is a schematic diagram of three logic management units in the related art;
Fig. 2 is a schematic diagram of implementing slice management in a European Telecommunications Standard Institute (ETSI) Network Function Virtualization (NFV) architecture in the related art;
Fig. 3 is a schematic diagram of a slice model association relationship described in a protocol in the related art;
Fig. 4 is a schematic diagram of an overall slice management architecture involving two protocols in the related art;
Fig. 5 is a collaboration flowchart of resource deployment in the related art;
Fig. 6 is a schematic diagram of a deployment manner for Access Network (AN) and Core Network (CN) sub-slices in a slice in the related art;
Fig. 7 is a flowchart of a slice resource deployment method according to an embodiment of the invention;
Fig. 8 is a resource access management flowchart according to an embodiment of the invention;
Fig. 9 is a resource collection flowchart according to an embodiment of the invention;
Fig. 10 is a first resource optimization flowchart according to an embodiment of the invention;
Fig. 11 is a second resource optimization flowchart according to an embodiment of the invention;
Fig. 12 is a third resource optimization flowchart according to an embodiment of the invention;
Fig. 13 is a fourth resource optimization flowchart according to an embodiment of the invention;
Fig. 14 is a composition structure diagram of a slice resource deployment device according to an embodiment of the invention; and
Fig. 15 is a structure diagram of another slice resource deployment device according to an embodiment of the invention.

### Detailed Description of the Embodiments

The invention is further described below in combination with the drawings and embodiments in detail. It should be understood that the specific embodiments described herein are adopted not to limit the invention but only to explain the invention.

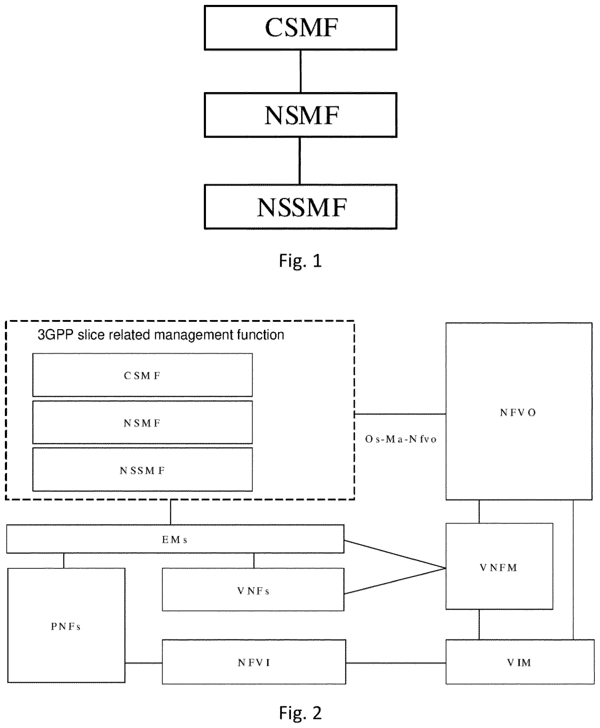

With the advent of next-generation 5th-Generation (5G) communication networks, the 3rd Generation Partnership Project (3GPP), as a setter of communication system specifications, is gradually improving and defining corresponding standards and specifications. Three logic management units are introduced into a present 28801 standard of the 3GPP: a Communication Service Management Function (CSMF), a Network Slice Management Function (NSMF) and a Network Slice Subnet (called sub-slice for short) Management Function (NSSMF). Fig. 1 is a schematic diagram of three logic management units in the related art. From the view of evolution of related communication technologies, it is widely accepted that the 3GPP focuses on service description while an ETSI NFV standard lays more emphasis on resource description. A virtual resource part involved in a slice life cycle is still implemented through existing Management and Orchestration (MANO).

On the other hand, implementation of slice management in an ETSI NFV architecture is also mentioned in an NFV-EVE012v013 standard in ETSI. Fig. 2 is a schematic diagram of implementing slice management in an ETSI NFV architecture in the related art. As shown in Fig. 2, slice related management functions of the 3GPP may be realized through a CSMF, an NSMF, an NSSMF and the like. Fig. 2 also involves an NFV Orchestrator (NFVO), Element Management (EMs), a Virtualized Infrastructure Manager (VIM), a Physical Network Function (PNFs) module, a Network Functions Virtualization Infrastructure (NFVI), a Virtualized Network Function (VNFs) module and a VNF Manager (VNFM). The NFVO may communicate with the CSMF, the NSMF or the NSSMF through an Os-Ma-nfvo interface. In ETSI GS NFV-IFA 013, there is only a Network Service (NS) type existing in an exposed life cycle management related interface of the NFVO at present.

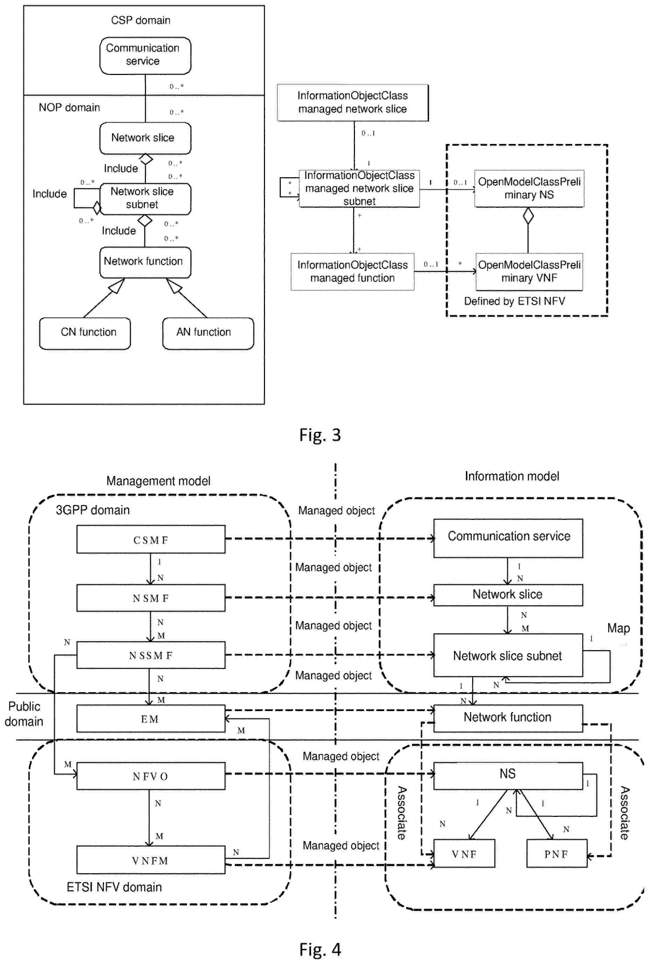

Integrating the two major protocols, i.e., 3GPP and ETSI NFV, a corresponding slice model association relationship refers to Fig. 3. Fig. 3 involves a Communication Service Provider (CSP) domain, a Network Operator (NOP) domain, communication service, a network slice, a network slice subnet, a network function, a CN function, an AN function, an InformationObjectClass managed network slice, an InformationObjectClass managed network slice subnet, an InformationObjectClass management function, OpenModelClassPreliminary NS, an OpenModelClassPreliminary VNF and the like.

Integrating the two major protocols, i.e., 3GPP and ETSI NFV, an overall slice management architecture involving two protocols refers to Fig. 4.

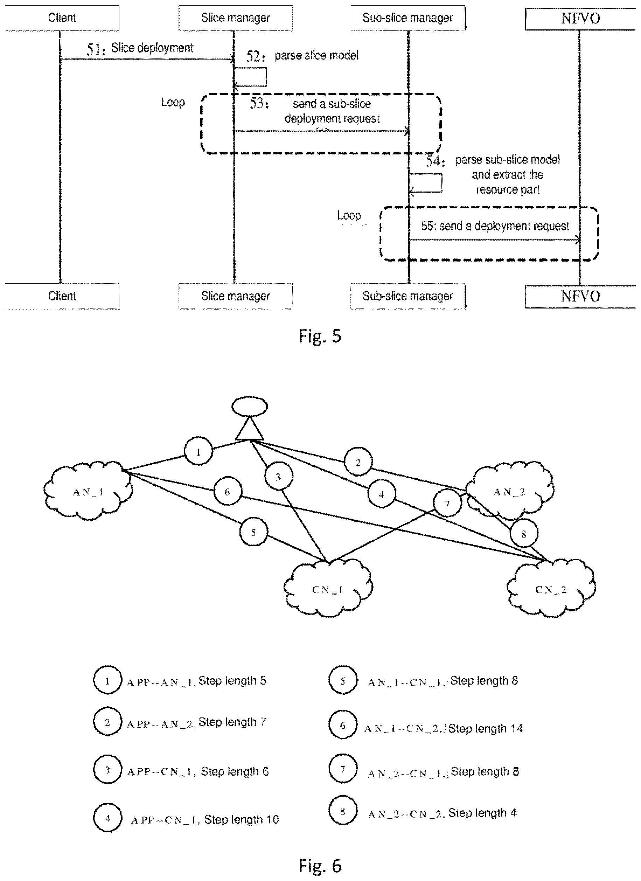

Fig. 5 is a collaboration flowchart of resource deployment in the related art. As shown in Fig. 5, the flow may include the following steps.

In Step 51, a client initiates a slice deployment request to a slice manager.

In Step 52, the slice manager parses a slice model and splits a sub-slice therein.

In Step 53, the slice manager transmits a sub-slice deployment request (Network Slice Subnet Instance (NSSI)) to a sub-slice manager respectively.

In Step 54, the sub-slice manager, after receiving the request, splits a sub-slice model and extracts a resource part.

In Step 55, the sub-slice manager transmits an NS deployment request to an NFVO.

Furthermore, the NFVO, after receiving the NS deployment request, may perform resource deployment.

The flow shown in Fig. 5 may be briefly summarized as follows: a resource part in a slice is split into NS for transmission to the NFVO to complete resource creation.

In an ETSI NFV domain, an NFVO has a resource authorization function. During VNF deployment, resource authorization of the NFVO may complete optimization of resource deployment positions (a VIM and a Tenant) through calculated deployed resources in combination with a corresponding optimization strategy. When there are two or more sub-slices in an end-to-end slice, optimizing resources in an NS or VNF resource authorization manner only in the NFVO has obvious shortcomings. Specifically, the NFVO may not perceive information of another sub-slice during authorization of the NS (resource part) in a single sub-slice. A slice has some requirements on a Service-Level Agreement (SLA), a characteristic parameter and the like, which may include latency, bandwidth and the like. In addition, sub-slices are managed under slices, and some affinity and anti-affinity relationships and the like may also exist between the sub-slices. Therefore, for overall slice resource management, it is necessary to combine end-to-end resource information to determine deployment positions of resources by comprehensive consideration. Once end-to-end slice resource optimization is completed, there is inevitably some influence brought to a resource authorization process of the original NFVO.

Exemplary descriptions are made below through Fig. 6.

In some place, a user requirement is received, it is necessary to enable low-latency and ultra-reliable Internet of things, and communication between terminal Applications (APPs) is completed by radio access through a CN. Under the condition that communication distance is considered as the only influencing factor of low latency, terminal APP->AN->CN requires a shortest path. Referring to Fig. 6, in Fig. 6, AN_1 and AN_2 represent different AN sub-slices, CN_1 and CN_2 represent different CN sub-slices, and ①, ②, ③, ④, ⑤, ⑥, ⑦ and ⑧ represent different lines.

### First scenario

When the AN sub-slice is independently deployed, AN_1 is optimally selected, and a step length of line 1 is shortest, only 5. When the CN sub-slice is independently deployed, CN_1 is optimally selected, and line 3 is optimally selected, of which a step length is shortest, only 6. In such case, communication between AN_1 and CN_1 is completed through line 5 of which a step length is 8, and a shortest step length of terminal APP->AN->CN is 13.

### Second scenario

When the AN sub-slice is selected to be deployed at AN_2, the step length is 7. When the CN sub-slice is selected to be deployed at CN_2, the step length is 10. In such case, communication between AN_2 and CN_2 is completed through line 2 of which a step length is 4, and the shortest step length of terminal APP->AN->CN is 11.

It can be seen from the two scenarios that optimal sub-slices do not mean that the whole final slice is optimal, resource deployment positions of the two sub-slices of the AN and CN are mutually affected to a certain extent and the corresponding deployment positions may be selected more reasonably only by comprehensively considering the overall condition of the two sub-slices. Of course, during a practical application, complicated factors such as VIM platforms supported for deployment respectively, a resource utilization condition of each VIM platform and a network communication condition between platforms under a cross-platform condition are also considered to finally select optimal deployment positions.

Based on problems existing in the related art, the embodiments of the invention provide an overall slice resource management and optimization mechanism on the premise of end-to-end resource virtualization, which may be configured to achieve visibility of end-to-end slice resources and allocate resources between sub-slices more effectively and reasonably.

Based on the contents recorded above, each of the following embodiments are proposed.

### Embodiment one

The embodiment one of the invention provides a slice resource deployment method, which may be applied to a slice manager.

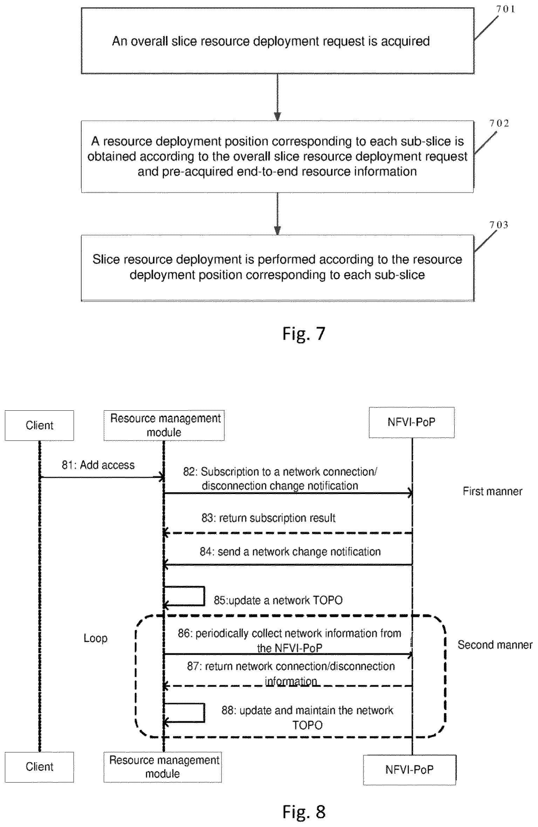

Fig. 7 is a flowchart of a slice resource deployment method according to an embodiment of the invention. As shown in Fig. 7, the flow may include the following steps.

In Step 701, an overall slice resource deployment request is acquired.

Here, the overall slice resource deployment request may include a resource deployment requirement of a slice and a resource deployment requirement of each sub-slice. Optionally, the resource deployment requirement of the slice includes, but not limited to, an SLA of the slice and a characteristic parameter of the slice. The resource deployment requirement of each sub-slice includes, but not limited to, resource requirement information of each sub-slice and an SLA of each sub-slice.

During a practical application, for any sub-slice, before a slice life cycle operation is executed, a sub-slice manager may send the resource deployment requirement of the sub-slice to the slice manager. For example, the sub-slice manager, before executing a sub-slice resource life cycle operation, may send the resource deployment requirement of the sub-slice to the slice manager. The slice manager organizes the collected sub-slice resource deployment requirement of each sub-slice to obtain the overall slice resource deployment request. Exemplarily, the overall slice resource deployment request may be a resource optimization request.

Here, the slice life cycle operation includes, but not limited to, slice resource redeployment, slice updating, slice termination and the like. Here, slice updating may include, but not limited to, slice resource position regulation, sub-slice addition and the like.

In Step 702, a resource deployment position corresponding to each sub-slice is obtained according to the overall slice resource deployment request and pre-acquired end-to-end resource information, the end-to-end resource information including an end-to-end resource network TOPO relationship and end-to-end resource running information.

Optionally, the end-to-end resource running information includes end-to-end virtual resource running information and end-to-end physical resource running information. For example, the end-to-end virtual resource running information may include an available virtual resource, a utilization rate of the virtual resource and the like. The end-to-end physical resource running information may include a real-time physical network bandwidth, a latency, a throughput and the like.

As an implementation mode, a Network Function Virtualization Infrastructure Point of Presence (NFVI-PoP) of each end-to-end platform resource may be accessed. Then, the end-to-end resource information may be collected from the NFVI-PoP of each end-to-end platform resource. In the embodiment of the invention, the platform resource is a VIM platform and the like.

In the embodiment of the invention, the end-to-end resource network TOPO relationship may reflect connectivity between resource platforms. Optionally, the end-to-end resource network TOPO relationship may be collected in a subscription-publishing or timing manner.

For the implementation mode of the step, exemplarily, platform resources that do not meet the overall slice resource deployment request are filtered according to the end-to-end resource information to obtain filtered platform resources. Then, the resource deployment position corresponding to each sub-slice is obtained according to the overall slice resource deployment request, the pre-acquired end-to-end resource information and the filtered platform resource.

For the implementation mode of filtering the platform resources that do not meet the overall slice resource deployment request, in an example, the platform resource may be filtered according to the overall slice resource deployment request and based on the following contents: a resource capacity, the SLA of the slice and a network connection/disconnection state of the platform resource. That is, the platform resource that does not meet the overall slice resource deployment request may be filtered from the prospective of the resource capacity, the SLA of the slice, the network connection/disconnection state of the platform resource and the like.

As an implementation mode, the platform resource corresponding to each sub-slice in the filtered platform resources may be determined based on a set strategy and according to the overall slice resource deployment request and the pre-acquired end-to-end resource information. Optionally, the set strategy may include, but not limited to, one or more of selecting the platform resource corresponding to a highest resource utilization rate, selecting the platform resource with a lowest resource load, selecting the platform resource with most idle resources, and the like.

Exemplarily, the platform resource corresponding to each sub-slice in the filtered platform resources may be determined according to a slice life cycle operation scenario corresponding to the overall slice resource deployment request and the end-to-end resource information. The slice life cycle operation scenario includes one of slice resource redeployment, slice resource position regulation and sub-slice addition.

Optionally, when the slice life cycle operation scenario includes slice resource redeployment, the resource deployment position of each sub-slice in the filtered platform resources may be determined according to the end-to-end resource information. When the slice life cycle operation scenario includes slice resource position regulation, a regulated resource deployment position of the sub-slice in the filtered platform resources may be determined according to the end-to-end resource information. When the slice life cycle operation scenario includes sub-slice addition, a resource deployment position of an added sub-slice in the filtered platform resources may be determined according to the end-to-end resource information.

Furthermore, when the slice life cycle operation scenario corresponding to the overall slice resource deployment request includes slice termination, the end-to-end resource information may be updated according to a slice termination request in the overall slice resource deployment request.

In Step 703, slice resource deployment is performed according to the resource deployment position corresponding to each sub-slice.

During the practical application, a resource management module, a resource collection module and a resource calculation module may be arranged. In the embodiment of the invention, the end-to-end resource information may be acquired by use of the resource management module and the resource collection module. In a specific example, the resource management module is responsible for accessing end-to-end all-range NFVI-PoPs and managing and maintaining information of the NFVI-PoPs. After successful access, the resource management module regularly transmits the information of all the NFVI-PoPs to each NFVI-PoP. The NFVI-PoP regularly executes a ping operation on another NFVI-PoP to check connectivity therebetween. Furthermore, the resource management module may regularly collect present connection/disconnection information from each NFVI-PoP and maintain the end-to-end resource network TOPO relationship through the collected information. That is, the resource management module may collect the end-to-end resource network TOPO relationship.

The resource collection module may be responsible for collecting two types of information from the NFVI-PoP, namely collecting the end-to-end virtual resource running information and the end-to-end physical resource running information.

As an example, in the embodiment of the invention, a resource management and collection flow may include the following operations. The NFVI-PoPs pre-embedded into a virtualization platform are successfully started. The resource management module implements access and manages and maintains the information of all the NFVI-PoPs and the TOPO relationship. The resource collection module collects utilization information of the NFVI-PoPs, including a total capacity, an available capacity, a bandwidth and the like, from the VIM platform in the subscription-publishing or timing manner according to the access information of the resource management module. In addition, it is also necessary to collect running information between the NFVI-PoPs, including connection/disconnection, the latency, the throughput, the bandwidth and the like.

The resource calculation module is responsible for analyzing data such as the SLA and characteristic parameter of the slice, the SLA of each sub-slice and the resource information from the perspective of the slice and calculating optimal positions for overall virtual resource deployment or after regulation in combination with the data collected by the resource collection module and the set strategy. The resource calculation module opens its capability and exposes interfaces related to resource optimization and the like.

The slice manager may send the overall slice resource deployment request to the resource calculation module. The resource calculation module may perform resource optimization according to requirement information (i.e., the overall slice resource deployment request) sent by the slice manager and in combination with the end-to-end resource network TOPO relationship, the end-to-end resource running information and a certain strategy. During resource optimization, factors such as the connectivity, physical bandwidth and latency between the platforms are considered. After the resource calculation module completes calculation, an optimized resource deployment position result may be returned to the slice manager. The slice manager transmits the resource deployment position result to each sub-slice manager, and the sub-slice manager performs deployment or updating, etc. at the specified resource deployment position.

Furthermore, affinity and anti-affinity relationships between the sub-slices may be obtained through at least one of a configuration of the resource management module and the overall slice resource deployment request.

In the embodiment of the invention, a resource optimization method in the slice life cycle operation may include the following steps.

In Step 1, the sub-slice manager, before executing the sub-slice resource life cycle operation, sends a request (the resource deployment requirement of the sub-slice) to the slice manager.

In Step 2, the slice manager, after receiving the request, organizes and sends the resource requirement information to the resource calculation module.

In Step 3, the resource calculation module, after receiving the overall slice resource deployment request, may filter platform resources that do not meet a condition (for example, filtering the platform resources that do not meet the overall slice resource deployment request) according to different slice life cycle operation scenarios and perform resource deployment position optimization in platforms that meet the condition in combination with a certain strategy (for example, resource fragment minimization, resource load averaging and idle resource preferred).

Step 3 will be described below with two slice life cycle operation scenarios as examples.
1: Slice deployment scenario (see details in a embodiment four of the invention)
   In the scenario, under the condition that all slice resources are deployed, the resource calculation module performs filtering of the following layers at first during resource optimization.
   A: from the perspective of the resource capacity: whether the resource capacity meets a condition or not is judged through platform resource capacity information acquired by the resource collection module, and the platform resource of which the capacity does not meet the condition is filtered.
   B: from the perspective of the SLA of the slice: whether the SLA is met or not is judged through information, such as the bandwidth and latency between the platforms, of the resource collection module, and the platform resource that does not meet the SLA is filtered.
   C: from the perspective of network connection/disconnection: the platform resource that is disconnected from a network is filtered according to the TOPO relationship maintained by the resource management module.
2: Slice updating-resource position regulation for meeting an SLA requirement (see details in a embodiment five of the invention)

Under the condition of finding in slice assurance that the SLA may not be met or a user actively regulates the SLA, the slice is updated in a manner of regulating resource positions to finally meet the requirement of the user. In the scenario, the slice resources have been deployed, resource deployment positions are required to be updated, and the resource calculation module preferentially performs filtering of the following layers.
A: from the perspective of the resource capacity: whether the resource capacity meets the condition or not is judged through the platform resource capacity information acquired by the resource collection module, and the platform resource of which the capacity does not meet the condition is filtered.
B: from the perspective of the SLA of the slice: under the condition that part of the resource positions are kept unchanged, a platform type required to be regulated is judged through the information, such as the bandwidth and latency between the platforms, of the resource collection module, and the platform resource that does not meet the condition is filtered.
C: from the perspective of network connection/disconnection: under the condition that part of the resource positions are kept unchanged, the platform resource that is disconnected from a network is filtered according to the TOPO relationship maintained by the resource management module.

A specific strategy for resource optimization will be described below with examples.

### 1: Resource fragment minimization (resource centralization)

According to the strategy, the platform resource corresponding to a relatively high resource utilization rate is preferably selected through the resource running information collected by the resource collection module.

### 2: Resource load averaging (resource balancing)

According to the strategy, the platform with a relatively low resource load is preferably selected through the resource running information collected by the resource collection module to keep resources of the platforms balanced.

### 3: Idle resource preferred

According to the strategy, the platform with most idle resources is preferably selected through the resource running information collected by the resource collection module.

Through some of the above calculations, an optimal resource deployment position of each sub-slice is selected, and the optimization result is returned to the slice manager.

In Step 4, the slice manager sends a received optimization result to the sub-slice manager respectively.

In Step 5, the sub-slice manager contains resource deployment position information to complete a further resource deployment operation.

During the practical application, the slice manager, the sub-slice manager, the resource management module, the resource collection module and the resource calculation module may be implemented by independent systems. Optionally, the resource management module, the resource collection module and the resource calculation module may also be integrated into the slice manager for implementation.

It can be seen that, with adoption of the technical solution of the embodiment of the invention, slice resource deployment may be performed based on the end-to-end resource information, and the end-to-end resource information reflects information of existing resources. Therefore, according to the slice resource deployment solution of the embodiment of the invention, overall end-to-end slice resource information may be obtained on one hand, and on the other hand, resources may be utilized optimally and fully by reasonable resource allocation. For example, resource optimization may be implemented in the life cycle operation scenario.

In conclusion, with adoption of the technical solution of the embodiment of the invention, overall resource management in the slice may be implemented, and by use of a resource calculation capability, it is ensured that the slice may be deployed more reasonably, the utilization efficiency of the resources is improved, and simplicity for implementation is ensured. The embodiment of the invention may be combined with a specific implementation mode to form a universal slice resource management and optimization solution.

The embodiment of the invention may have the following effects: 1) the end-to-end slice resources, the corresponding resource running information and the utilization rates are visible; 2) the connectivity, affinity and anti-affinity relationships and the like between a sub-slice and another sub-slice are fully considered; and 3) the requirements on the SLAs and characteristic parameters of the slice resources are met, and the resources are allocated reasonably.

According to the embodiment of the invention, overall end-to-end slice resource management may be implemented by use of the resource management module, the resource collection module and the resource calculation module. Specifically, the resource information provided by the resource management module and the resource collection module is fully utilized, an interface query manner is adopted, and the requirements of the slice and the sub-slice are combined, so that the problem of how to allocate the resources in the slice optimally is solved perfectly, and an intelligent optimal design of the deployment positions of the slice is provided for the user.

It is proposed in the embodiment of the invention that corresponding modules (the resource management module, the resource collection module and the resource calculation module) are adopted to access all the end-to-end virtual resource platforms and collect the corresponding resource information from the accessed platforms to complete overall end-to-end virtual resource management. Based on the technical solution of the embodiment of the invention, in a life cycle operation process of slice deployment or updating, etc., a resource optimization manner is established in the slice manager and the sub-slice manager, and in this manner, the slice manager may transmit the resource deployment information to the sub-slice manager to help the sub-slice to select the optimal resource deployment position. In a related resource optimization technology, sequentially optimizing and creating sub-slices has obvious defects, and the life cycle operation of overall slice deployment or updating, etc. is relatively high in time consumption. According to the technical solution of the embodiment of the invention, resource optimization may be implemented for each sub-slice in a unified manner, and concurrent operations of sub-slice resource deployment may be implemented. Compared with the related art, the technical solution is lower in resource deployment time consumption and has obvious advantages.

### Embodiment two

For embodying the purpose of the invention better, exemplary descriptions are further made based on the embodiment one of the invention.

In the embodiment two of the invention, the manner the resource management module acquires the network TOPO relationship is mainly described. That is, through the resource management module, the NFVI-PoP may be accessed, and a network TOPO may be maintained. The resource management module implements access and maintains the network TOPO on the premise that the NFVI-PoP is pre-embedded into a VIM platform and is started.

Fig. 8 is a resource access management flowchart according to an embodiment of the invention. As shown in Fig. 8, the flow may include the following steps.

In Step 81, added NFVI-PoPs are accessed.

Specifically, all visible NFVI-PoPs are accessed in the resource management module.

After Step 81, the network TOPO may be maintained in a first manner or a second manner, which will be described below respectively.

### The first manner

In Step 82, subscription to a network connection/disconnection change notification is performed.

Specifically, the resource management module may subscribe to the network connection/disconnection change notification from the NFVI-PoP.

In Step 83, a subscription result is returned.

Specifically, the NFVI-PoP may return the subscription result to the resource management module.

In Step 84, a network change notification is sent.

Specifically, the NFVI-PoP may send the network change notification to the resource management module.

In Step 85, the network TOPO is updated.

Specifically, the resource management module updates the network TOPO according to the received network connection/disconnection change notification.

The second manner: the resource management module sets a periodic task and periodically synchronizes, from the NFVI-PoP, and updates the network TOPO information maintained by it. Specific descriptions are made below.

In Step 86, network information is periodically collected from the NFVI-PoP.

Specifically, the resource management module may periodically collect the network information from the NFVI-PoP.

In Step 87, network connection/disconnection information is returned.

Specifically, the NFVI-PoP may return the network connection/disconnection information to the resource management module.

In Step 88, the network TOPO is updated and maintained.

Specifically, the resource management module synchronizes and updates the network TOPO information maintained by it.

### Embodiment three

For embodying the purpose of the invention better, exemplary descriptions are further made based on the embodiment one of the invention.

In the embodiment three of the invention, a resource utilization and running condition of each NFVI-PoP is collected through the resource collection module.

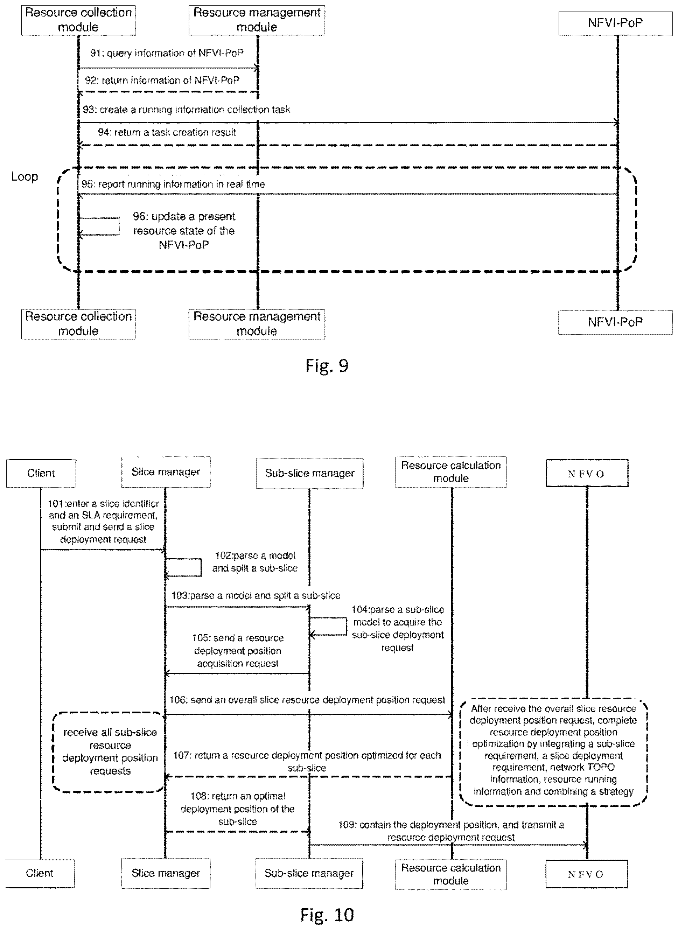

Fig. 9 is a resource collection flowchart according to an embodiment of the invention. As shown in Fig. 9, the flow may include the following steps.

In Step 91, the resource collection module sends a query request to the resource management module to query information of an NFVI-PoP.

In Step 92, the resource management module returns the information of the NFVI-PoP to the resource collection module.

In Step 93, the resource collection module sends a running information collection task creation request to the NFVI-PoP.

In Step 94, the NFVI-PoP creates a collection task according to the received request and returns a task creation result to the resource collection module.

In Step 95, the NFVI-PoP periodically reports running information.

In Step 96, the resource collection module acquires the reported running information and updates a present resource state of the NFVI-PoP.

### Embodiment four

For embodying the purpose of the invention better, exemplary descriptions are further made based on the embodiment one of the invention.

In the embodiment four of the invention, a resource optimization flow for slice deployment is described.

Fig. 10 is a first resource optimization flowchart according to an embodiment of the invention. As shown in Fig. 10, the flow may include the following steps.

In Step 101, a user, after entering information such as a slice identifier and an SLA requirement in a client, submits and sends a slice deployment request to the slice manager to trigger a deployment flow.

In Step 102, the slice manager, after receiving the deployment request, parses a slice model and splits a sub-slice deployment request.

In Step 103, the slice manager sends the sub-slice deployment request to each sub-slice manager.

In Step 104, the sub-slice manager, after receiving the deployment request, parses a sub-slice model to acquire the sub-slice deployment request (i.e., the abovementioned resource deployment requirement of the sub-slice). For example, requirements on the SLA, resources and the like of the sub-slice may be acquired.

In Step 105, the sub-slice manager sends a resource deployment position acquisition request to the slice manager, the request including SLA information such as the bandwidth, latency and jitter of the sub-slice and total resource demand information.

In Step 106, the slice manager, after receiving each sub-slice deployment position request, sends an overall slice resource deployment position request (i.e., the abovementioned overall slice resource deployment request) to the resource calculation module.

In Step 107, the resource calculation module, after receiving the overall slice resource deployment position request, performs resource deployment position optimization by integrating the sub-slice requirement, the slice deployment requirement, the network TOPO information, the resource running information and the like and combining a certain strategy (for example, resource fragment minimization, resource load averaging and idle resource preferred).

That is, the resource calculation module is required to consider the following information during resource deployment position optimization:
1) requirement information of the resources, SLA and the like of each sub-slice;
2) requirement information of the slice; and
3) the network TOPO information and resource running information in the resource management module.

After calculation, a resource deployment position optimization result of each sub-slice is returned to the slice manager.

In Step 108, the slice manager receives the optimization result and returns a respective optimal deployment position to the sub-slice manager.

In Step 109, the sub-slice manager contains resource deployment position information and initiates a resource deployment request to the NFVO.

### Embodiment five

For embodying the purpose of the invention better, exemplary descriptions are further made based on the embodiment one of the invention.

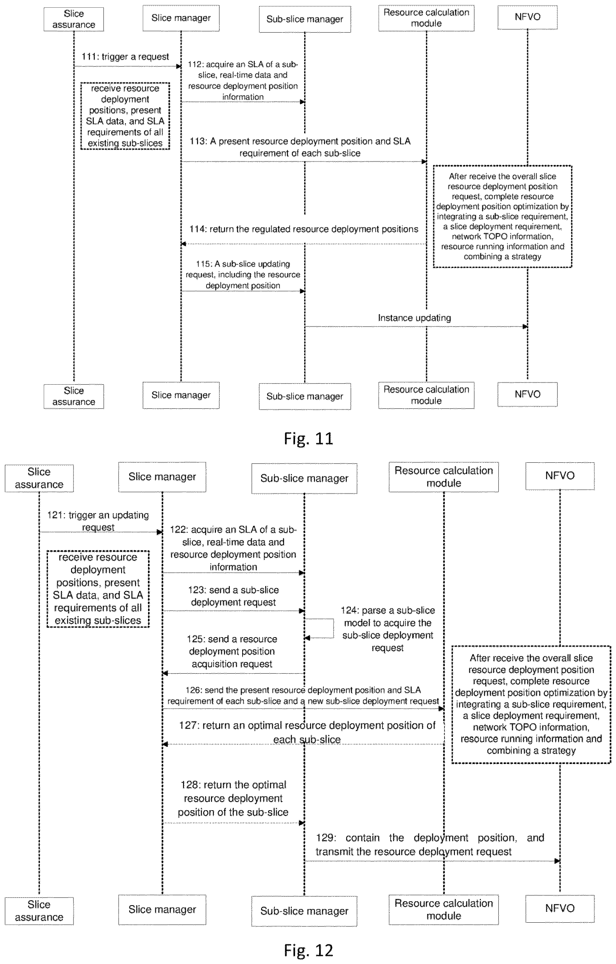

In the embodiment five of the invention, a slice updating (resource position regulation) flow is described. Exemplarily, it is found in slice assurance that the SLA does not meet the user requirement, and the target requirement is met in a manner of regulating resource deployment positions for slice updating. A resource optimization flow in a slice resource regulation process (only optimization of the SLA of the slice by resource position regulation is considered at present) is described below through Fig. 11.

Fig. 11 is a second resource optimization flowchart according to an embodiment of the invention. As shown in Fig. 11, the flow may include the following steps.

In Step 111, the SLA requirement of the user may not be met (the SLA is not up to standard) in a slice assurance process, so that slice updating (resource position regulation) is required, and a slice deployment position updating request is triggered.

In Step 112, the slice manager, after receiving the slice deployment position updating request, sends a sub-slice information acquisition request to each sub-slice manager and acquires the SLA of each sub-slice, real-time data information and present sub-slice resource deployment position information therefrom.

In Step 113, the slice manager sends a request (which may be integrated in an overall slice resource deployment position optimization request) of acquiring a present resource position and SLA requirement of each sub-slice to the resource calculation module.

In Step 114, the resource calculation module, after receiving the overall slice resource deployment position optimization request, regulates the resource deployment position by integrating the present deployment position and SLA requirement of the sub-slice, the network TOPO information, the resource running information and the like and combining a strategy, and returns the regulated resource deployment position to the slice manager.

In Step 115, the slice manager transmits a sub-slice updating request to the sub-slice manager, including information of the resource deployment position and the like.

In Step 116, instance updating is performed.

Specifically, the sub-slice manager, after receiving the updating request, completes operations of resource updating or migration, etc. by use of the NFVO.

### Embodiment six

For embodying the purpose of the invention better, exemplary descriptions are further made based on the embodiment one of the invention.

In the embodiment six of the invention, the slice updating (sub-slice addition) flow is described. Exemplarily, it is found in slice assurance that the SLA does not meet the user requirement, and the target requirement is met in a manner of sub-slice addition for slice updating. A resource optimization flow in a sub-slice addition process is described below through Fig. 12.

Fig. 12 is a third resource optimization flowchart according to an embodiment of the invention. As shown in Fig. 12, the flow may include the following steps.

In Step 121, the SLA requirement of the user may not be met (the SLA is not up to standard) in the slice assurance process, so that slice updating is required, and a sub-slice addition-based slice updating request is triggered.

In Step 122, the slice manager, after receiving the sub-slice addition-based slice updating request, sends a sub-slice information acquisition request to each existing sub-slice manager and acquires the SLA of each sub-slice, real-time data information and present sub-slice resource deployment position information therefrom.

In Step 123, the slice manager sends a deployment request of a sub-slice required to be added to the corresponding sub-slice manager.

In Step 124, the sub-slice manager, after receiving the deployment request, parses a sub-slice model to acquire the sub-slice deployment request (for example, including the requirements on the SLA and the resources).

In Step 125, the sub-slice manager sends a resource deployment position acquisition request to the slice manager, the request including SLA information such as the bandwidth, latency and jitter of the sub-slice and total resource demand information.

In Step 126, the slice manager collects and organizes information of the present resource position, SLA requirement and the like of each existing sub-slice and an added sub-slice resource deployment requirement, and sends the overall slice resource deployment request to the resource calculation module.

In Step 127, the resource calculation module, after receiving the overall slice resource deployment position request, optimizes a new sub-slice deployment position by integrating the resource information of the present deployment position, SLA requirement and the like of the existing sub-slice, the network TOPO information, the resource running information and the added sub-slice deployment requirement and combining a strategy, and returns a resource deployment position optimization result of the added sub-slice to the slice manager.

In Step 128, the slice manager receives the optimization result and returns a respective optimal deployment position to the sub-slice manager.

In Step 129, the sub-slice manager contains resource deployment position information and initiates a resource deployment request to the NFVO.

### Embodiment seven

For embodying the purpose of the invention better, exemplary descriptions are further made based on the embodiment one of the invention.

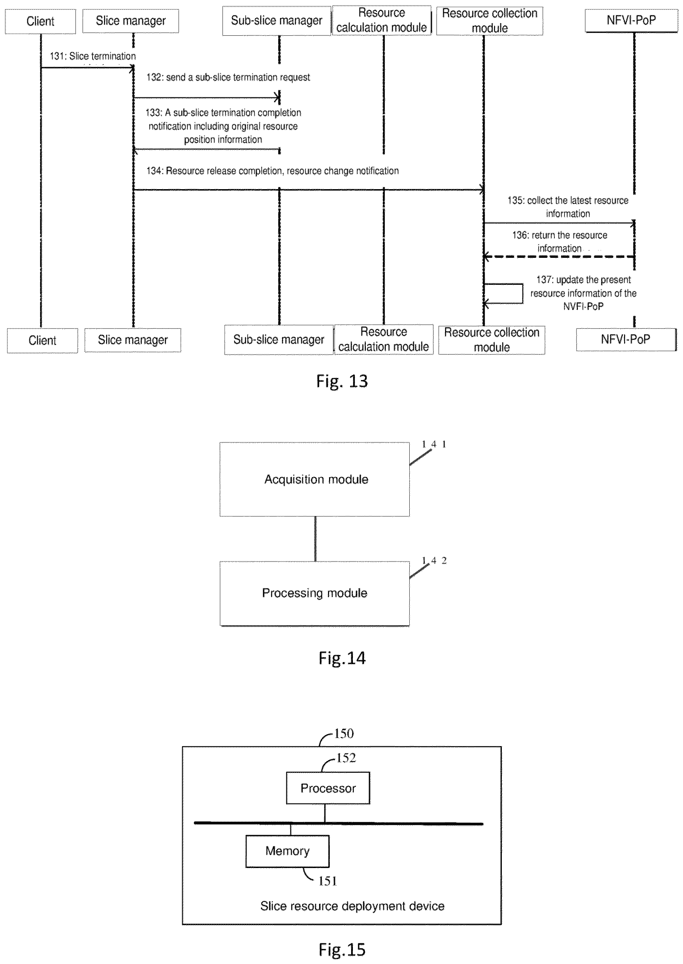

In the embodiment seven of the invention, a resource termination flow is described. A resource optimization flow in a slice termination scenario is described below through Fig. 13.

Fig. 13 is a fourth resource optimization flowchart according to an embodiment of the invention. As shown in Fig. 13, the flow may include the following steps.

In Step 131, a user triggers a slice termination request from a client.

In Step 132, the slice manager, after receiving the slice termination request, sends a sub-slice termination request to each sub-slice manager according to saved sub-slice information.

In Step 133, the sub-slice manager, after completing a slice termination operation, notifies the slice manager that the sub-slice has been terminated and contains sub-slice resource deployment position information.

In Step 134, the slice manager, after receiving a sub-slice termination completion notification, contains the resource deployment position information to notify the resource collection module that a resource at a present position changes.

In Step 135, the resource collection module receives resource change information and sends a latest resource information query request to a corresponding NFVI-PoP according to provided resource position information to collect latest resource information.

In Step 136, the NFVI-PoP, after completing collecting the resource information, returns the resource information to the resource collection module.

In Step 137, the resource collection module, after receiving the latest resource information, updates the resource information of the NFVI-PoP.

### Embodiment eight

Based on the slice resource deployment method disclosed in the abovementioned embodiments of the invention, the embodiment eight of the invention provides a slice resource deployment device, which may be applied to a device such as a slice manager.

Fig. 14 is a composition structure diagram of a slice resource deployment device according to an embodiment of the invention. As shown in Fig. 14, the device includes an acquisition module 141 and a processing module 142.

The acquisition module 141 is configured to acquire an overall slice resource deployment request.

The processing module 142 is configured to obtain a resource deployment position corresponding to each sub-slice according to the overall slice resource deployment request and pre-acquired end-to-end resource information and perform slice resource deployment according to the resource deployment position corresponding to each sub-slice, the end-to-end resource information including an end-to-end resource network TOPO relationship and end-to-end resource running information.

In an implementation mode, the processing module 142 is specifically configured to filter platform resources that do not meet the overall slice resource deployment request according to the end-to-end resource information to obtain filtered platform resources and obtain the resource deployment position corresponding to each sub-slice according to the overall slice resource deployment request, the pre-acquired end-to-end resource information and the filtered platform resource.

In an implementation mode, the processing module 142 is specifically configured to filter the platform resource according to the overall slice resource deployment request and based on the following contents: a resource capacity, an SLA of a slice and a network connection/disconnection state of the platform resource.

In an implementation mode, the processing module 142 is specifically configured to determine the platform resource corresponding to each sub-slice in the filtered platform resources based on a set strategy and according to the overall slice resource deployment request and the pre-acquired end-to-end resource information.

The set strategy includes one or more of selecting the platform resource corresponding to a highest resource utilization rate, selecting the platform resource with a lowest resource load and selecting the platform resource with most idle resources.

In an implementation mode, the processing module 142 is specifically configured to determine the platform resource corresponding to each sub-slice in the filtered platform resources according to a slice life cycle operation scenario corresponding to the overall slice resource deployment request and the end-to-end resource information, the slice life cycle operation scenario including one of slice resource redeployment, slice resource position regulation and sub-slice addition.

In an implementation mode, the processing module 142 is specifically configured to, when the slice life cycle operation scenario includes slice resource redeployment, determine the resource deployment position of each sub-slice in the filtered platform resources according to the end-to-end resource information.

In an implementation mode, the processing module 142 is specifically configured to, when the slice life cycle operation scenario includes slice resource position regulation, determine a regulated resource deployment position of the sub-slice in the filtered platform resources according to the end-to-end resource information.

In an implementation mode, the processing module 142 is specifically configured to, when the slice life cycle operation scenario includes sub-slice addition, determine a resource deployment position of an added sub-slice in the filtered platform resources according to the end-to-end resource information.

In an implementation mode, the processing module 142 is further configured to, when the slice life cycle operation scenario corresponding to the overall slice resource deployment request includes slice termination, update the end-to-end resource information according to a slice termination request in the overall slice resource deployment request.

In an implementation mode, the end-to-end resource running information includes end-to-end virtual resource running information and end-to-end physical resource running information.

In an implementation mode, the processing module 142 is further configured to access an NFVI-PoP of each end-to-end platform resource and collect the end-to-end resource information from the NFVI-PoP of each end-to-end platform resource.

In an implementation mode, the overall slice resource deployment request includes a resource deployment requirement of the slice and a resource deployment requirement of each sub-slice.

In an implementation mode, the resource deployment requirement of the slice includes an SLA of the slice and a characteristic parameter of the slice.

In an implementation mode, the resource deployment requirement of each sub-slice includes resource requirement information of each sub-slice and an SLA of each sub-slice.

During a practical application, both the acquisition module 141 and the processing module 142 may be implemented by a Central Processing Unit (CPU), a Micro Processor Unit (MPU), a Digital Signal Processor (DSP) or a Field Programmable Gate Array (FPGA), etc.

In addition, each function module in the embodiment may be integrated into a processing unit, each unit may also physically exist independently, and two or more than two units may also be integrated into a unit. The integrated unit may be implemented in a hardware form and may also be implemented in form of software function module.

If being implemented in form of a software function module and sold or used as an independent product, the integrated unit may be stored in a computer-readable storage medium. Based on such an understanding, the technical solution of the embodiment substantially or parts making contributions to the conventional art or all or part of the technical solution may be embodied in form of a software product, and the computer software product is stored in a storage medium, including a plurality of instructions configured to enable a computer device (which may be a personal computer, a server, a network device or the like) or a processor to execute all or part of the steps of the method in the embodiment. The storage medium includes various media capable of storing program codes such as a U disk, a mobile Hard Disk Drive (HDD), a Read Only Memory (ROM), a Random Access Memory (RAM), a magnetic disk or an optical disk.

Specifically, a computer program instruction corresponding to the slice resource deployment method in the embodiment may be stored in the storage medium such as an optical disk, an HDD and a U disk. When the computer program instruction corresponding to the slice resource deployment method in the storage medium is read or executed by an electronic device, the steps of any slice resource deployment method in the abovementioned embodiments is implemented.

Based on the same technical concept of the abovementioned embodiments, referring to Fig. 15, another slice resource deployment device 150 provided in an embodiment of the invention is shown. The device may include a memory 151 and a processor 152.

The memory 151 is configured to store a computer program and data.

The processor 152 is configured to execute the computer program stored in the memory to implement the steps of any slice resource deployment method of the abovementioned embodiments.

During a practical application, the memory 151 may be a volatile memory such as a RAM, or a non-volatile memory such as a ROM, a flash memory, an HDD or a Solid-State Drive (SSD), or a combination of memories of the abovementioned types, and provides an instruction and data for the processor 152.

The processor 152 may be at least one of an Application Specific Integrated Circuit (ASIC), a DSP, a Digital Signal Processing Device (DSPD), a Programmable Logic Device (PLD), an FPGA, a CPU, a controller, a microcontroller and an MPU. It can be understood that, for different devices, other electronic apparatuses configured to realize the functions of the processor may also be adopted, and no specific limits are made in the embodiment of the invention.

### Embodiment nine

The embodiment nine of the invention provides a slice manager, which includes any slice resource deployment device in the embodiment eight of the invention.

Those skilled in the art should know that the embodiment of the invention may be provided as a method, a system or a computer program product. Therefore, the invention may adopt a form of pure hardware embodiment, pure software embodiment and combined software and hardware embodiment. Moreover, the invention may adopt a form of computer program product implemented in one or more computer-available storage media (including, but not limited to, a disk memory and an optical memory) including computer-available program codes.

The invention is described with reference to flowcharts and/or block diagrams of the method, equipment (system) and computer program product according to the embodiment of the invention. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment. The above is only the preferred embodiment of the invention and not intended to limit the scope of protection of the invention.

## Claims

1. A slice resource deployment method, comprising:
acquiring (701) an overall slice resource deployment request by organizing sub-slice resource deployment requirement of each sub-slice;
obtaining a resource deployment position corresponding to each sub-slice according to the overall slice resource deployment request and pre-acquired end-to-end resource information, the end-to-end resource information comprising end-to-end resource network topology relationship and end-to-end resource running information (702); and
performing slice resource deployment according to the resource deployment position corresponding to each sub-slice (703);
wherein obtaining the resource deployment position corresponding to each sub-slice according to the overall slice resource deployment request and the pre-acquired end-to-end resource information comprises:
filtering Virtualized Infrastructure Manager, VIM, platform resources that do not meet the overall slice resource deployment request according to the end-to-end resource information to obtain filtered VIM platform resources; and
obtaining the resource deployment position corresponding to each sub-slice according to the overall slice resource deployment request, the pre-acquired end-to-end resource information and the filtered VIM platform resources.

2. The method according to claim 1, wherein filtering the VIM platform resources that do not meet the overall slice resource deployment request comprises: filtering the VIM platform resources according to the overall slice resource deployment request and based on the following: a resource capacity, a Service-Level Agreement, SLA, of a slice and a network connection/disconnection state of the VIM platform resources.

3. The method according to claim 1, wherein obtaining the resource deployment position corresponding to each sub-slice according to the overall slice resource deployment request, the pre-acquired end-to-end resource information and the filtered VIM platform resources comprises:
determining the VIM platform resource corresponding to each sub-slice in the filtered VIM platform resources based on a set strategy and according to the overall slice resource deployment request and the pre-acquired end-to-end resource information,
the set strategy comprising one or more of selecting the VIM platform resource corresponding to a highest resource utilization rate, selecting the VIM platform resource with a lowest resource load and selecting the VIM platform resource with most idle resources.

4. The method according to claim 3, wherein determining the VIM platform resource corresponding to each sub-slice in the filtered VIM platform resources according to the overall slice resource deployment request and the pre-acquired end-to-end resource information comprises:
determining the VIM platform resource corresponding to each sub-slice in the filtered VIM platform resources according to a slice life cycle operation scenario corresponding to the overall slice resource deployment request and the end-to-end resource information, the slice life cycle operation scenario comprising one of slice resource redeployment, adjustment of slice resource position and sub-slice addition.

5. The method according to claim 4, wherein determining the VIM platform resource corresponding to each sub-slice in the filtered VIM platform resources according to the slice life cycle operation scenario corresponding to the overall slice resource deployment request and the end-to-end resource information comprises:
when the slice life cycle operation scenario comprises slice resource redeployment, determining the resource deployment position of each sub-slice in the filtered VIM platform resources according to the end-to-end resource information.

6. The method according to claim 4, wherein determining the VIM platform resource corresponding to each sub-slice in the filtered VIM platform resources according to the slice life cycle operation scenario corresponding to the overall slice resource deployment request and the end-to-end resource information comprises:
when the slice life cycle operation scenario comprises slice resource position regulation, determining an adjusted resource deployment position of the sub-slice in the filtered VIM platform resources according to the end-to-end resource information.

7. The method according to claim 4, wherein determining the VIM platform resource corresponding to each sub-slice in the filtered VIM platform resources according to the slice life cycle operation scenario corresponding to the overall slice resource deployment request and the end-to-end resource information comprises:
when the slice life cycle operation scenario comprises sub-slice addition, determining a resource deployment position of an added sub-slice in the filtered VIM platform resources according to the end-to-end resource information.

8. The method according to claim 1, further comprising:
when the slice life cycle operation scenario corresponding to the overall slice resource deployment request comprises slice termination, updating the end-to-end resource information according to a slice termination request in the overall slice resource deployment request.

9. The method according to claim 1, wherein the end-to-end resource running information comprises end-to-end virtual resource running information and end-to-end physical resource running information.

10. The method according to claim 2 or 9, further comprising:
accessing a Network Function Virtualization Infrastructure Point of Presence, NFVI-PoP, of each end-to-end VIM platform resource; and
collecting the end-to-end resource information from the NFVI-PoP of each end-to-end VIM platform resource.

11. The method according to claim 1, wherein the overall slice resource deployment request comprises a resource deployment requirement of the slice and a resource deployment requirement of each sub-slice.

12. The method according to claim 11, wherein the resource deployment requirement of the slice comprises the SLA of the slice and a characteristic parameter of the slice.

13. The method according to claim 12, wherein the resource deployment requirement of each sub-slice comprises resource requirement information of each sub-slice and an SLA of each sub-slice.

14. A slice resource deployment device, comprising an acquisition module (141) and a processing module (142), wherein
the acquisition module (141) is configured to acquire an overall slice resource deployment request by organizing sub-slice resource deployment requirement of each sub-slice; and the processing module (142) is configured to obtain a resource deployment position corresponding to each sub-slice according to the overall slice resource deployment request and pre-acquired end-to-end resource information and perform slice resource deployment according to the resource deployment position corresponding to each sub-slice, the end-to-end resource information comprising end-to-end resource network topology relationship and end-to-end resource running information;
wherein obtaining the resource deployment position corresponding to each sub-slice according to the overall slice resource deployment request and the pre-acquired end-to-end resource information comprises:
filtering Virtualized Infrastructure Manager, VIM, platform resources that do not meet the overall slice resource deployment request according to the end-to-end resource information to obtain filtered VIM platform resources; and
obtaining the resource deployment position corresponding to each sub-slice according to the overall slice resource deployment request, the pre-acquired end-to-end resource information and the filtered VIM platform resources.

## Patentansprüche

1. Verfahren zum Einsatz von Slice-Ressourcen, das Folgendes umfasst:
Erfassen (701) einer Gesamt-Slice-Ressourceneinsatzanforderung durch Organisieren der Sub-Slice-Ressourceneinsatzanforderung jeder Sub-Slice;
Erlangen einer Ressourceneinsatzposition, die jeder Sub-Slice entspricht, gemäß der Gesamt-Slice-Ressourceneinsatzanforderung und zuvor erfassten End-to-End-Ressourceninformationen, wobei die End-to-End-Ressourceninformationen eine End-to-End-Ressourcen-Netztopologiebeziehung und End-to-End-Ressourcenbetriebsinformationen umfassen (702); und
Durchführen des Einsatzes von Slice-Ressourcen gemäß der Ressourceneinsatzposition, die jeder Sub-Slice (703) entspricht;
wobei Erlangen der Ressourceneinsatzposition, die jedem Sub-Slice entspricht, gemäß der Gesamt-Slice-Ressourceneinsatzanforderung und den zuvor erfassten End-to-End-Ressourceninformationen umfasst:
Filtern von Virtualized Infrastructure Manager, VIM, Plattformressourcen, die die Gesamt-Slice-Ressourceneinsatzanforderung nicht erfüllen, gemäß den End-to-End-Ressourceninformationen, um gefilterte VIM-Plattformressourcen zu erlangen; und
Erlangen der Ressourceneinsatzposition, die jeder Sub-Slice entspricht, gemäß der Gesamt-Slice-Ressourceneinsatzanforderung, den zuvor erfassten End-to-End-Ressourceninformationen und den gefilterten VIM-Plattformressourcen.

2. Verfahren nach Anspruch 1, wobei Filtern der VIM-Plattformressourcen, die die Gesamt-Slice-Ressourceneinsatzanforderung nicht erfüllen, Folgendes umfasst:
Filtern der VIM-Plattformressourcen gemäß der Gesamt-Slice-Ressourceneinsatzanforderung und basierend auf dem Folgenden: einer Ressourcenkapazität, einem Service-Level-Agreement, SLA, einer Slice und einem Netzwerkverbindungs-/Trennungszustand der VIM-Plattformressourcen.

3. Verfahren nach Anspruch 1, wobei Erlangen der Ressourceneinsatzposition, die jeder Sub-Slice entspricht, gemäß der Gesamt-Slice-Ressourceneinsatzanforderung, den zuvor erfassten End-to-End-Ressourceninformationen und den gefilterten VIM-Plattformressourcen Folgendes umfasst:
Bestimmen der VIM-Plattformressource, die jeder Sub-Slice in den gefilterten VIM-Plattformressourcen entspricht, basierend auf einer eingestellten Strategie und gemäß der Gesamt-Slice-Ressourceneinsatzanforderung und den zuvor erfassten End-to-End-Ressourceninformationen,
wobei die eingestellte Strategie eines oder mehrere von Auswählen der VIM-Plattformressource, die der höchsten Ressourcennutzungsrate entspricht, Auswählen der VIM-Plattformressource mit der geringsten Ressourcenlast und Auswählen der VIM-Plattformressource mit den meisten ungenutzten Ressourcen umfasst.

4. Verfahren nach Anspruch 3, wobei Bestimmen der VIM-Plattformressource, die jeder Sub-Slice in den gefilterten VIM-Plattformressourcen entspricht, gemäß der Gesamt-Slice-Ressourceneinsatzanforderung und der zuvor erfassten End-to-End-Ressourceninformationen Folgendes umfasst:
Bestimmen der VIM-Plattformressource, die jeder Sub-Slice in den gefilterten VIM-Plattformressourcen entspricht, gemäß einem Slice-Lebenszyklus-Operationsszenario, das der Gesamt-Slice-Ressourceneinsatzanforderung und den End-to-End-Ressourceninformationen entspricht, wobei das Slice-Lebenszyklus-Operationsszenario eines von Neueinsetzen von Slice-Ressourcen, Einstellen der Slice-Ressourceneinsatzposition und Sub-Slice-Addition umfasst.

5. Verfahren nach Anspruch 4, wobei Bestimmen der VIM-Plattformressource, die jeder Sub-Slice in den gefilterten VIM- Plattformressourcen entspricht, gemäß dem Slice-Lebenszyklus-Operationsszenario, das der Gesamt-Slice-Ressourceneinsatzanforderung und den End-to-End-Ressourceninformationen entspricht, Folgendes umfasst:
wenn das Slice-Lebenszyklus-Operationsszenario Neueinsetzen der Slice-Ressourcen umfasst, Bestimmen der Ressourceneinsatzposition jeder Sub-Slice in den gefilterten VIM- Plattformressourcen gemäß den End-to-End-Ressourceninformationen.

6. Verfahren nach Anspruch 4, wobei Bestimmen der VIM-Plattformressource, die jeder Sub-Slice in den gefilterten VIM- Plattformressourcen entspricht, gemäß dem Slice-Lebenszyklus-Operationsszenario, das der Gesamt-Slice-Ressourceneinsatzanforderung und den End-to-End-Ressourceninformationen entspricht, Folgendes umfasst:
wenn das Slice-Lebenszyklus-Operationsszenario Regulieren der Slice-Ressourcenposition umfasst, Bestimmen einer angepassten Ressourceneinsatzposition der Sub-Slice in den gefilterten VIM- Plattformressourcen gemäß den End-to-End-Ressourceninformationen.

7. Verfahren nach Anspruch 4, wobei Bestimmen der VIM-Plattformressource, die jeder Sub-Slice in den gefilterten VIM- Plattformressourcen entspricht, gemäß dem Slice-Lebenszyklus-Operationsszenario, das der Gesamt-Slice-Ressourceneinsatzanforderung und den End-to-End-Ressourceninformationen entspricht, Folgendes umfasst:
wenn das Slice-Lebenszyklus-Operationsszenario Hinzufügen von Sub-Slice umfasst, Bestimmen einer Ressourceneinsatzposition einer hinzugefügten Sub-Slice in den gefilterten VIM- Plattformressourcen gemäß den End-to-End-Ressourceninformationen.

8. Verfahren nach Anspruch 1, ferner umfassend:
wenn das Slice-Lebenszyklus-Operationsszenario, das der Gesamt-Slice-Ressourceneinsatzanforderung entspricht, Beenden des Slice umfasst, Aktualisieren der End-to-End-Ressourceninformationen gemäß einer Slice-Beendigungsanforderung in der Gesamt-Slice-Ressourceneinsatzanforderung.

9. Verfahren nach Anspruch 1, wobei die End-to-End-Ressourcenlaufinformationen End-to-End-Laufinformationen für virtuelle Ressourcen und End-to-End-Laufinformationen für physische Ressourcen umfassen.

10. Verfahren nach Anspruch 2 oder 9, ferner umfassend:
Zugreifen auf einen Network Function Virtualization Infrastructure Point of Presence, NFVI-PoP, jeder End-to-End VIM-Plattformressource, und
Sammeln der End-to-End-Ressourceninformationen von dem NFVI-PoP jeder End-to-End-VIM-Plattformressource.

11. Verfahren nach Anspruch 1, wobei die Gesamt-Slice-Ressourceneinsatzanforderung eine Ressourceneinsatzanforderung der Slice und eine Ressourceneinsatzanforderung jeder Sub-Slice umfasst.

12. Verfahren nach Anspruch 11, wobei die Ressourceneinsatzanforderung der Slice das SLA der Slice und einen charakteristischen Parameter der Slice umfasst.

13. Verfahren nach Anspruch 12, wobei die Ressourceneinsatzanforderung jeder Sub-Slice Ressourcenanforderungsinformationen jeder Sub-Slice und ein SLA jeder Sub-Slice umfasst.

14. Vorrichtung zum Einsetzen von Slice-Ressourcen, umfassend ein Erfassungsmodul (141) und ein Verarbeitungsmodul (142), wobei
das Erfassungsmodul (141) so konfiguriert ist, dass es eine Gesamt-Slice-Ressourceneinsatzanforderung erfasst, indem es die Sub-Slice-Ressourceneinsatzanforderung jeder Sub-Slice organisiert; und
das Verarbeitungsmodul (142) so konfiguriert ist, dass es eine Ressourceneinsatzposition, die jeder Sub-Slice entspricht, gemäß der Gesamt-Slice-Ressourceneinsatzanforderung und zuvor erfassten End-to-End-Ressourceninformationen erlangt und den Einsatz von Slice-Ressourcen gemäß der Ressourceneinsatzposition entsprechend jeder Sub-Slice durchführt, wobei die End-to-End-Ressourceninformationen eine End-to-End-Ressourcen-Netztopologiebeziehung und End-to-End-Ressourcenlaufinformationen umfassen;
wobei Erlangen der Ressourceneinsatzposition, die jedem Sub-Slice entspricht, gemäß der Gesamt-Slice-Ressourceneinsatzanforderung und den zuvor erfassten End-to-End-Ressourceninformationen umfasst:
Filtern von Virtualized Infrastructure Manager, VIM, Plattformressourcen, die die Gesamt-Slice-Ressourceneinsatzanforderung nicht erfüllen, gemäß den End-to-End-Ressourceninformationen, um gefilterte VIM-Plattformressourcen zu erlangen; und
Erlangen der Ressourceneinsatzposition, die jeder Sub-Slice entspricht, gemäß der Gesamt-Slice-Ressourceneinsatzanforderung, den zuvor erfassten End-to-End-Ressourceninformationen und den gefilterten VIM-Plattformressourcen.

## Revendications

1. Procédé de déploiement de ressources de tranches, comprenant :
l'acquisition (701) d'une demande globale de déploiement de ressources de tranches par organisation de l'exigence de déploiement de ressources de sous-tranche de chaque sous-tranche ;
l'obtention d'une position de déploiement de ressources correspondant à chaque sous-tranche selon la demande globale de déploiement de ressources de tranches et selon les informations pré-acquises de ressources de bout en bout, les informations de ressources de bout en bout comprenant une relation topologique de réseau de ressources de bout en bout et des informations d'exécution de ressources de bout en bout (702) ; et
la réalisation d'un déploiement de ressources de tranches selon la position de déploiement de ressources correspondant à chaque sous-tranche (703) ;
l'obtention de la position de déploiement de ressources correspondant à chaque sous-tranche selon la demande globale de déploiement de ressources de tranches et selon les informations pré-acquises de ressources de bout en bout comprenant :
le filtrage des ressources de plateforme de Gestionnaire d'infrastructures virtualisées, VIM, qui ne répondent pas à la demande globale de déploiement de ressources de tranches selon les informations de ressources de bout en bout pour obtenir des ressources filtrées de plateforme de VIM ; et
l'obtention de la position de déploiement de ressources correspondant à chaque sous-tranche selon la demande globale de déploiement de ressources de tranches, selon les informations pré-acquises de ressources de bout en bout et selon les ressources filtrées de plateforme de VIM.

2. Procédé selon la revendication 1, dans lequel le filtrage des ressources de plateforme de VIM qui ne répondent pas à la demande globale de déploiement de ressources de tranches comprend :
le filtrage des ressources de plateforme de VIM selon la demande globale de déploiement de ressources de tranches et d'après les éléments suivants : une capacité de ressource, un Accord de niveau de service, SLA, d'une tranche et un état de connexion/déconnexion de réseau des ressources de plateforme de VIM.

3. Procédé selon la revendication 1, dans lequel lors de l'obtention de la position de déploiement de ressources correspondant à chaque sous-tranche selon la demande globale de déploiement de ressources de tranches, les informations pré-acquises de ressources de bout en bout et les ressources filtrées de plateforme de VIM comprennent :
la détermination de la ressource de plateforme de VIM correspondant à chaque sous-tranche des ressources filtrées de plateforme de VIM d'après une stratégie définie et selon la demande globale de déploiement de ressources de tranches et selon les informations pré-acquises de ressources de bout en bout,
la stratégie définie comprenant la sélection de la ressource de plateforme de VIM correspondant à un taux maximal d'utilisation de ressources, la sélection de la ressource de plateforme de VIM à charge minimale de ressources et/ou la sélection de la ressource de plateforme de VIM dont le nombre de ressources inutilisées est maximal.

4. Procédé selon la revendication 3, dans lequel la détermination de la ressource de plateforme de VIM correspondant à chaque sous-tranche des ressources filtrées de plateforme de VIM selon la demande globale de déploiement de ressources de tranches et selon les informations pré-acquises de ressources de bout en bout comprend :
la détermination de la ressource de plateforme de VIM correspondant à chaque sous-tranche des ressources filtrées de plateforme de VIM selon un scénario d'opération de cycle de vie de tranche correspondant à la demande globale de déploiement de ressource de tranches et aux informations de ressources de bout en bout, le scénario d'opération de cycle de vie de tranche comprenant le redéploiement des ressources de tranches, l'ajustement de la position des ressources de tranches et/ou l'ajout de sous-tranches.

5. Procédé selon la revendication 4, dans lequel la détermination de la ressource de plateforme de VIM correspondant à chaque sous-tranche des ressources filtrées de plateforme de VIM selon le scénario de fonctionnement du cycle de vie de tranche correspondant à la demande globale de déploiement de ressources de tranches et selon les informations de ressource de bout en bout comprend :
lorsque le scénario d'exploitation de cycle de vie de tranche comprend un redéploiement de ressources de tranches, la détermination de la position de déploiement de ressources de chaque sous-tranche des ressources filtrées de plateforme de VIM selon les informations de ressources de bout en bout.

6. Procédé selon la revendication 4, dans lequel la détermination de la ressource de plateforme de VIM correspondant à chaque sous-tranche des ressources filtrées de plateforme de VIM selon le scénario de fonctionnement du cycle de vie de tranche correspondant à la demande globale de déploiement de ressources de tranches et selon les informations de ressource de bout en bout comprend :
lorsque le scénario d'exploitation de cycle de vie de tranche comprend une régulation de position de ressource de tranches, la détermination d'une position ajustée de déploiement de ressources de la sous-tranche des ressources filtrées de plateforme de VIM selon les informations de ressource de bout en bout.

7. Procédé selon la revendication 4, dans lequel la détermination de la ressource de plateforme de VIM correspondant à chaque sous-tranche des ressources filtrées de plateforme de VIM selon le scénario de fonctionnement du cycle de vie de tranche correspondant à la demande globale de déploiement de ressources de tranches et selon les informations de ressource de bout en bout comprend :
lorsque le scénario d'exploitation de cycle de vie de tranche comprend l'ajout de sous-tranches, la détermination d'une position de déploiement de ressources d'une sous-tranche ajoutée des ressources filtrées de plateforme de VIM selon les informations de ressources de bout en bout.

8. Procédé selon la revendication 1, comprenant en outre :
lorsque le scénario d'exploitation de cycle de vie de tranche correspondant à la demande globale de déploiement de ressources de tranches comprend une terminaison de tranche, la mise à jour des informations de ressources de bout en bout selon une demande de terminaison de tranche de la demande globale de déploiement de ressources de tranches.

9. Procédé selon la revendication 1, dans lequel les informations d'exécution de ressources de bout en bout comprennent des informations d'exécution de ressources virtuelles de bout en bout et des informations d'exécution de ressources physiques de bout en bout.

10. Procédé selon la revendication 2 ou 9, comprenant en outre :
l'accès à un Point de présence d'infrastructure de virtualisation de fonction de réseau, NFVI-PoP, de chaque ressource de plateforme de VIM de bout en bout ; et
la collecte des informations de ressource de bout en bout à partir du NFVI-PoP de chaque ressource de plateforme de VIM de bout en bout.

11. Procédé selon la revendication 1, dans lequel la demande globale de déploiement de ressources de tranches comprend une exigence de déploiement de ressources de la tranche et une exigence de déploiement de ressources de chaque sous-tranche.

12. Procédé selon la revendication 11, dans lequel l'exigence de déploiement de ressources de la tranche comprend le SLA de la tranche et un paramètre caractéristique de la tranche.

13. Procédé selon la revendication 12, dans lequel l'exigence de déploiement de ressources de chaque sous-tranche comprend des informations d'exigence de ressources de chaque sous-tranche et un SLA de chaque sous-tranche.

14. Dispositif de déploiement de ressources de tranches, comprenant un module d'acquisition (141) et un module de traitement (142), dans lequel
le module d'acquisition (141) est configuré pour acquérir une demande globale de déploiement de ressources de tranches par organisation de l'exigence de déploiement de ressources de sous-tranche de chaque sous-tranche ; et
le module de traitement (142) est configuré pour obtenir une position de déploiement de ressources correspondant à chaque sous-tranche selon la demande globale de déploiement de ressources de tranches et selon les informations pré-acquises de ressources de bout en bout et pour effectuer un déploiement de ressources de tranches selon la position de déploiement de ressources correspondant à chaque sous-tranche, les informations de ressources de bout en bout comprenant une relation topologique de réseau de ressources de bout en bout et des informations d'exécution de ressources de bout en bout ;
l'obtention de la position de déploiement de ressources correspondant à chaque sous-tranche selon la demande globale de déploiement de ressources de tranches et selon les informations pré-acquises de ressources de bout en bout comprenant :
le filtrage des ressources de plateforme de Gestionnaire d'infrastructures virtualisées, VIM, qui ne répondent pas à la demande globale de déploiement de ressources de tranches selon les informations de ressources de bout en bout pour obtenir des ressources filtrées de plateforme de VIM ; et
l'obtention de la position de déploiement de ressources correspondant à chaque sous-tranche selon la demande globale de déploiement de ressources de tranches, selon les informations pré-acquises de ressources de bout en bout et selon les ressources filtrées de plateforme de VIM.
